# EUROPEAN PATENT APPLICATION

(11) **EP 1 576 915 A1**
(43) Date of publication of application: **21.09.2005**
(21) Application number: 05075654.3
(22) Date of filing: 18.03.2005
(51) Int. Cl.: A47J 37/12, A47J 36/02

(54) **Deep-frying**

(30) Priority: 19.03.2004 NL 1025775
(71) Applicant: VAN DIJK FOOD PRODUCTS ( LOPIK) B.V., 3411 ME Lopik (NL)
(72) Inventor: Gaal, Mark Jacob, 3411 ME Lopik (NL)
(74) Representative: Brookhuis, Hendrik Jan Arnold

(57) **Abstract**

A deep-frying system comprising a deep-frying apparatus (1;10), which serves for accommodating a quantity of deep-frying fat or oil, which can be brought to and kept at a deep-frying temperature suitable for deep-frying foodstuffs by heating means (4).

The system furthermore comprises a disposable deep-frying pan component (20;30;40;101;140;150;160;170;180) associated with the deep-frying apparatus (1;10), which is designed as a disposable deep-frying pan, or as a disposable deep-frying pan lining element which can be placed in a deep-frying pan (3;12) of the deep-frying apparatus so as to be removable, in such a manner that the deep-frying pan lining element bears against the deep-frying pan (3;12) and the deep-frying fat or oil does not come into contact with the deep-frying pan (3;12).

## Description

The present invention relates to deep-frying foodstuffs.

In deep-frying, use is made of a deep-frying apparatus which serves for accommodating a quantity of deep-frying fat or oil, which can be brought to and kept at a deep-frying temperature suitable for deep-frying foodstuffs by heating means.

In its simplest form, the deep-frying apparatus is just a pan which is placed on a hob or the like. Many deep-frying apparatuses which are currently being sold for home or other small-scale use consist of a housing comprising a deep-frying pan, the housing furthermore being provided with a hinged lid for closing off the deep-frying pan during use and storage. Heating is usually provided in the form of an electrical heater which is placed either directly in the tub with deep-frying fat or oil or heats the exterior of the deep-frying pan.

After a number of times, for example 8 to 15 times (often depending on the product to be deep-fried), the deep-frying fat or oil cannot really be used anymore and should be replaced. In addition, the deep-frying pan becomes dirty as a result of food sticking to it even if the walls of the known deep-frying pan are usually provided with a non-stick layer, such as a Teflon layer. With many known deep-frying apparatuses, the deep-frying pan can therefore be removed from the housing. This makes it easier to empty the pan, for example by returning the fat/oil to the bottles in which the fat/oil was bought, and also makes it possible to clean the pan.

The operations described above are regarded as inconvenient and time-consuming. This is particularly problematic in a work environment, for example in a canteen, where time is money and knowledgeable staff are often scarce. However, these drawbacks are also experienced in a home environment. For these reasons, replacing the fat/oil is sometimes postponed, which is undesirable from a health (and culinary) point of view.

It is an object of the invention to propose improvements which eliminate one or more of the above disadvantages.

To this end, the invention provides a deep-frying system comprising a deep-frying apparatus which accommodates a quantity of deep-frying fat or oil, which can be brought to and kept at a deep-frying temperature suitable for deep-frying foodstuffs by heating means.

The deep-frying system according to the invention is characterized in that the system furthermore comprises a disposable deep-frying pan component which can be used in combination with the deep-frying apparatus and which is designed as a disposable deep-frying pan or as a disposable deep-frying pan lining element which can be placed in a deep-frying pan of a deep-frying apparatus so as to be removable, in such a manner that the deep-frying pan lining element bears against the deep-frying pan and the deep-frying fat or oil does not come into contact with the deep-frying pan.

In other words, the invention provides for the deep-frying pan not having to be cleaned anymore, unlike the known deep-frying apparatuses, but for the deep-frying pan component which has become filthy through food sticking to it simply to be thrown away. As a result thereof, no use has to be made of environmentally unfriendly cleaning agents, so that a suitable choice of material for the disposable deep-frying pan component immediately results in an environmental advantage.

In an advantageous embodiment, the invention also provides for the disposable deep-frying pan component to be designed to be part of a disposal packaging in order to be disposed of as waste together with the deep-frying fat or oil contained therein. With this version, the user does not even have to remove the deep-frying fat or oil from the disposable deep-frying pan component, as everything can be disposed of in a single operation. As deep-frying fat or oil does not cause any environmental problems when burnt in waste incineration installations, for example, this is also a responsible solution from an environmental point of view.

Advantageously, provision is made for the deep-frying system to furthermore comprise a sales packaging with the deep-frying fat or oil contained therein, the disposable deep-frying pan component forming part of the sales packaging with the deep-frying fat or oil contained therein. Thus, the user not only buys the deep-frying fat or oil, but at the same time also buys the disposable deep-frying pan component, all of which are contained within one single packaging.

Particularly advantageously, provision is made for the disposable deep-frying pan component to be filled with the deep-frying fat or oil in the sales packaging. As the deep-frying fat or oil is already present in the disposable deep-frying pan component, the user only has to install the deep-frying pan component in the deep-frying apparatus before deep-frying can commence.

In one practical embodiment, the deep-frying pan component is designed to hold a quantity of oil of between 1 and 6 litres.

In an alternative embodiment, the deep-frying fat or oil is contained in a separate packaging, for example in a bottle or bag (known per se), which in turn forms part of the sales packaging. The separate packaging may in that case be packaged inside the disposable deep-frying pan component in order to save space.

Preferably, the disposal and/or sales packaging furthermore comprises sealing means for sealing the disposable deep-frying pan component with the deep-frying fat or oil contained therein. This measure enables the user, for example, to seal the disposable deep-frying pan component with the deep-frying fat or oil contained therein and subsequently deposit the sealed unit in the waste container. With the sales packaging, the sealing means are particularly effective if the disposable deep-frying pan component has been filled with the deep-frying fat or oil.

Particularly for the sales packaging, it is desirable for the sealing means to achieve an airtight seal of the deep-frying fat or oil.

In one possible embodiment, the disposal and/or sales packaging furthermore comprises a separate sleeve, for example a box (optionally with a matching lid) or a bag, for accommodating the disposable deep-frying pan component with the deep-frying fat contained therein.

Preferably, the sealing means comprise a disposable lid for sealing the open top of the disposable deep-frying pan component, so that the sealed deep-frying pan component with the deep-frying fat or oil contained therein can be used as disposal packaging.

Preferably, coupling means are provided, for example designed as snap-in means for effecting a coupling between the lid and the disposable deep-frying pan component. In the coupled state, the lid fits the deep-frying pan component tightly, preferably liquid-tight and if desired even airtight, for example in an embodiment in which the disposable deep-frying pan component and the lid are provided with peripheral edges which can be coupled to one another.

As a deep-frying pan is usually not filled with deep-frying fat or oil up to the rim, provision is made in an advantageous embodiment for the lid to have a cover face which extends over the deep-frying fat or oil, which top face is recessed with respect to the top edge of the disposable deep-frying pan component.

In one possible embodiment, the lid is provided with at least one handle for carrying the disposable deep-frying pan component closed off by the lid. Alternatively or in combination therewith, the disposable deep-frying pan component could also be provided with a handle.

In one possible embodiment, a sealing film/foil is provided for sealing the disposable deep-frying pan component filled with the deep-frying fat or oil. The sealing film/foil is preferably airtight, for example by providing a metal layer in the film/foil. If desired, the film/foil may be fastened using a heat-sealed connection along the periphery of the deep-frying pan component, in such a manner that the film/foil can be torn off by the user.

The disposable deep-frying pan component may, at least partially, be made of metal, preferably sheet metal, such as for example aluminium or stainless steel, the metal optionally being provided with a non-stick coating for the deep-frying fat or oil. However, this layer could also be omitted as the deep-frying pan component does not have a long service life and does not require cleaning. In this case, the inside of the deep-frying pan component is not provided with a coating layer, at least not with a non-stick layer.

In one possible embodiment, the disposable deep-frying pan component comprises a dimensionally stable body made of metal with a thickness of, for example, between 0.5 and 1.5 millimetres. Such a component can be produced inexpensively, for example, by deep-drawing a suitable metal sheet, or by bending and folding of suitable sheet metal.

In an alternative embodiment, the disposable deep-frying pan component is at least partially made of metal foil, such as aluminium foil, of a thickness of preferably not more than 0.4 millimetres, preferably not more than 0.2 millimetres.

In another alternative embodiment, the disposable deep-frying pan component is at least partially made of heat-resistant plastic material. As is well known, temperatures of between 150 and 250 degrees Celsius, preferably between 170 and 220 degrees Celsius occur when deep-frying foodstuffs. The prior art discloses plastics which are able to withstand such temperatures, such as for example polytetrafluoroethylene (Teflon), C-PET and PC (polycarbonate), polyamide.

In yet another embodiment, the disposable deep-frying pan component is at least partly made of heat-resistant plastic film material, such as for example polytetrafluoroethylene film.

It will be clear that the disposable deep-frying pan component may consist of a combination of materials, for example metal in the hottest areas and plastic in other areas. The disposable deep-frying pan component for example has a base which is partly made of metal and a peripheral wall which is at least partly made of plastic.

In one possible embodiment, the disposable deep-frying pan component comprises a support structure, for example made of metal, which supports a deep-frying fat/oil reservoir made of film/foil material.

In one possible embodiment, the disposable deep-frying pan component is filled with deep-frying oil virtually or completely without air. For example, less than 10% by volume of air is present in the filled deep-frying pan component.

This can be achieved, for example, by providing the disposable deep-frying pan component with a connector, preferably with corresponding closure means, for connection to a filling installation, in such a manner that the disposable deep-frying pan component can be filled with deep-frying oil via the connector.

This kind of filling via a connector, which is for example provided on the removable sealing means for sealing the open top of the deep-frying pan component, may be advantageous in order to achieve a high production rate and a small inclusion of air (or the complete exclusion of air). Such a connector may, for example, be arranged in the lid or removable sealing film/foil. The connector has a channel, for example, into which a filler needle of a filling installation can be inserted.

The invention furthermore provides a sales packaging containing deep-frying fat or oil intended for use in combination with a deep-frying apparatus which is characterized in that the sales packaging contains a disposable deep-frying pan component.

Particularly advantageously, the disposable deep-frying pan component is filled with the deep-frying fat or oil.

The invention furthermore relates to a disposable deep-frying pan component.

The invention furthermore relates to the use of such a system when deep-frying, in particular when disposing of used deep-frying fat or oil.

The invention also relates to a method for selling deep-frying fat or oil to users, which makes use of a disposable deep-frying pan component.

The invention will be explained below with reference to the exemplary embodiments shown in the figure, in which:
Fig. 1 shows a deep-frying apparatus according to the prior art,
Fig. 2 shows another deep-frying apparatus according to the prior art,
Fig. 3 shows a first embodiment of a disposable deep-frying pan component according to the invention,
Fig. 4 shows a second embodiment of a disposable deep-frying pan component according to the invention,
Fig. 5 shows a third embodiment of a disposable deep-frying pan component according to the invention,
Fig. 6 shows a sectional view of a fourth embodiment of a disposable deep-frying pan component with matching lid according to the invention,
Fig. 7 shows a sectional view of a detail of the coupling between a disposable deep-frying pan component and a matching lid,
Fig. 8 shows a sectional view of a fifth embodiment of a disposable deep-frying pan component with matching lid according to the invention,
Fig. 9 shows a sectional view of a sixth embodiment of a disposable deep-frying pan component with matching film/foil sealing according to the invention,
Fig. 10 shows a perspective view of an example of a sales packaging according to the invention,
Fig. 11 shows a sectional view of a seventh embodiment of a disposable deep-frying pan component with matching lid according to the invention,
Fig. 12 shows a disposable deep-frying pan component according to the invention and deep-frying fat or oil packaged in a bag-shaped packaging,
Fig. 13 shows an eighth embodiment of a disposable deep-frying pan component with matching lid according to the invention,
Fig. 14 shows another sales packaging according to the invention in parts,
Figs. 15a, b show an alternative disposable deep-frying pan component according to the invention in various states,
Figs. 16a, b show an alternative disposable deep-frying pan component according to the invention in various states,
Figs. 17a, b show an alternative disposable deep-frying pan component according to the invention in various states,
Figs. 18a-c show an alternative disposable deep-frying pan component according to the invention in various states containing a bag of deep-frying oil.

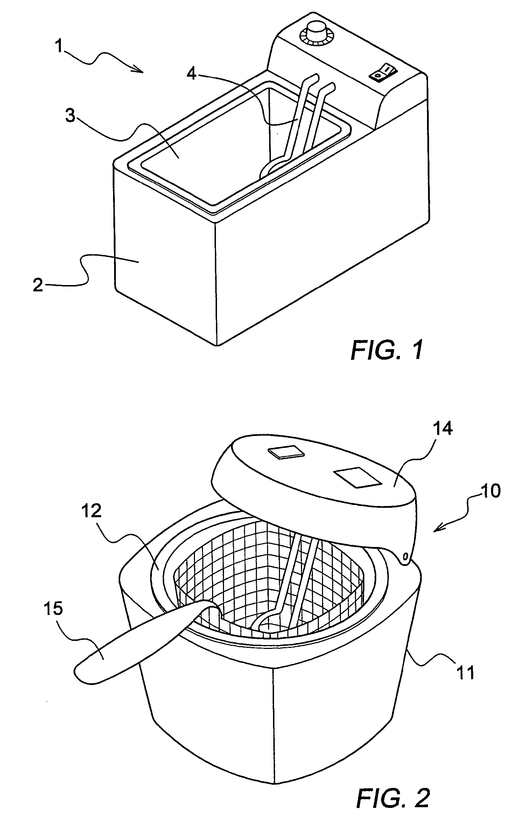

Fig. 1 shows a known deep-frying apparatus 1 with a housing 2, a deep-frying pan 3 which can be removed from the housing, and electrical heating means 4 which can be placed in the deep-frying pan 3 for heating the deep-frying fat or oil and keeping it at the deep-frying temperature.

The deep-frying pan 3 is a metal container which is open at the top and has a substantially rectangular base with upright side walls, a projecting peripheral flange extending along the top edge of the deep-frying pan 3.

Fig. 2 shows another known deep-frying apparatus 10 with a housing 11, a removable deep-frying pan 12 and electrical heating means (not shown) accommodated inside the housing 1 which heat the pan 12 from the outside. The apparatus 10 has a hinged lid 14. Furthermore, a basket 15 can be seen into which the foodstuffs to be deep-fried are placed.

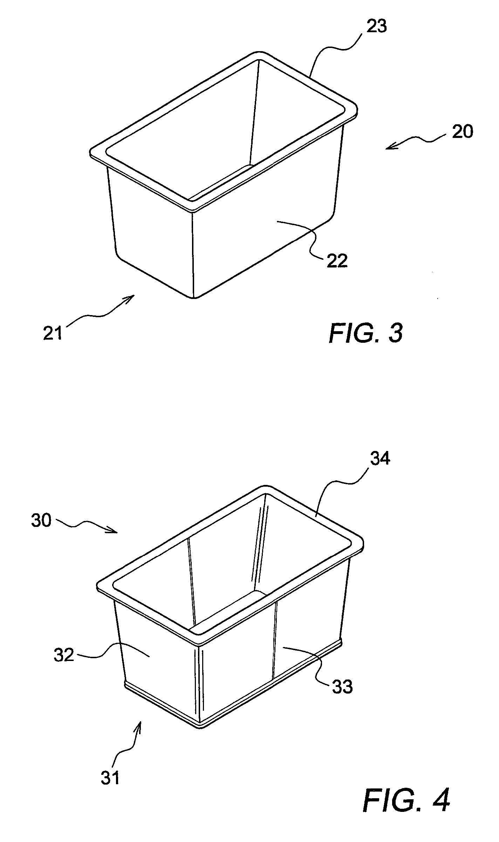

Fig. 3 shows a disposable deep-frying pan component 20 in the shape of a container which is open at the top and has a substantially rectangular base 21 and upright side walls 22 which are directed outwards at a slight angle. A projecting peripheral edge 23 extends along the top edge. The component 20 is, for example, made by deep-drawing suitable sheet metal, but other sheet processing methods are conceivable.

The deep-frying pan component 20 in this case has a dimensionally stable body made of metal of a thickness between 0.5 and 1.5 millimetres.

The component 20 is for example made of aluminium sheet or stainless steel.

A non-stick layer on the inside is preferably omitted in order to keep the cost price low and for environmental reasons.

The invention provides for such an inexpensive component 20 to be used as a removable deep-frying pan, for example in combination with an apparatus according to Fig. 1 or 2.

It is also conceivable for the component 20 to be used in combination with an apparatus provided with a deep-frying pan (which is optionally removable), in which the component 20 serves as a disposable deep-frying pan lining element which is suitable to be placed inside the deep-frying pan of the deep-frying apparatus so as to be removable, in such a manner that the deep-frying pan lining element bears against the deep-frying pan and the deep-frying fat or oil does not come into contact with the deep-frying pan.

With both solutions, the user no longer needs to clean the deep-frying pan, since the disposable deep-frying pan component which has become dirty during deep-frying as a result of food sticking to it can be disposed of.

Fig. 4 shows a disposable deep-frying pan component 30 which is in this case composed of a number of shaped parts, such as baseplate 31 and two side wall plate parts 32, 33 and a top flanged edge 34.

It is conceivable for the baseplate 31 to be made of metal, whereas the one or more side wall plate parts 32, 33 are made of plastic which can withstand the temperatures (up to 250 degrees Celsius) and circumstances occurring during deep-frying.

The component 30 may also serve as a disposable deep-frying pan or as a lining element for a deep-frying pan.

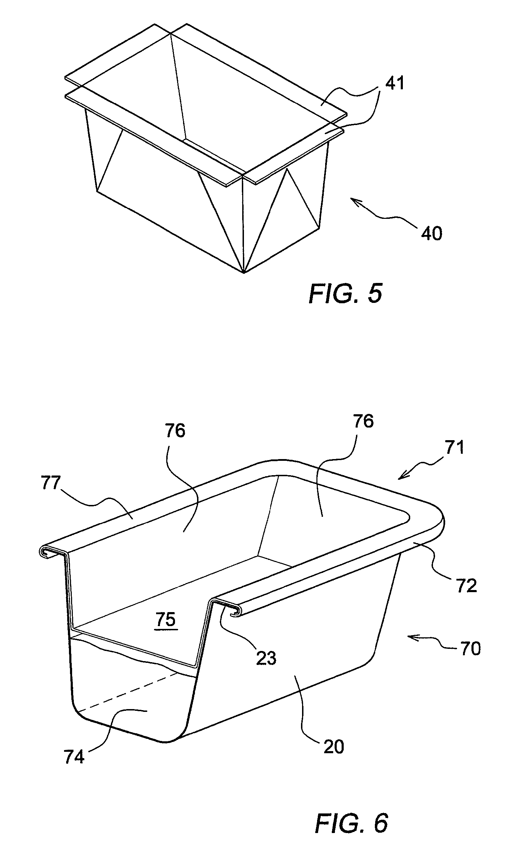

Fig. 5 shows a disposable deep-frying pan component 40 which is made from a suitable (metal) sheet essentially by folding. In this case, the folded-out lips 41 form supporting elements for supporting the component 40 inside the apparatus.

Fig. 6 shows a disposal and/or sales packaging 70 for deep-frying fat or oil, for example containing the component 20 of Fig. 3. The component 20 is provided with a fitting lid 71 which is, for example, made of plastic, for example by injection-moulding. The lid 71 can be coupled to the component 20 by means of a clamping engagement of the outer edge 72 of the lid 71 and the flanged edge 23.

The component 20 is filled with a quantity 74 of deep-frying fat or oil, so that the level of the fat is some distance below the top edge of component 20.

The lid 71 has a cover face 75 which extends over the deep-frying fat or oil 74, which cover face 75 is recessed with respect to the top edge of the disposable deep-frying pan component 20.

The lid 71 has side walls 76 protruding upwards from the peripheral edge of the cover face 75 which end in a top peripheral flanged edge 77 of the lid, so that the side walls 76 of the lid extend along the side walls 22 of the disposable deep-frying pan component and the peripheral flanged edge 77 bears against the peripheral edge 23 of the disposable deep-frying pan component 20.

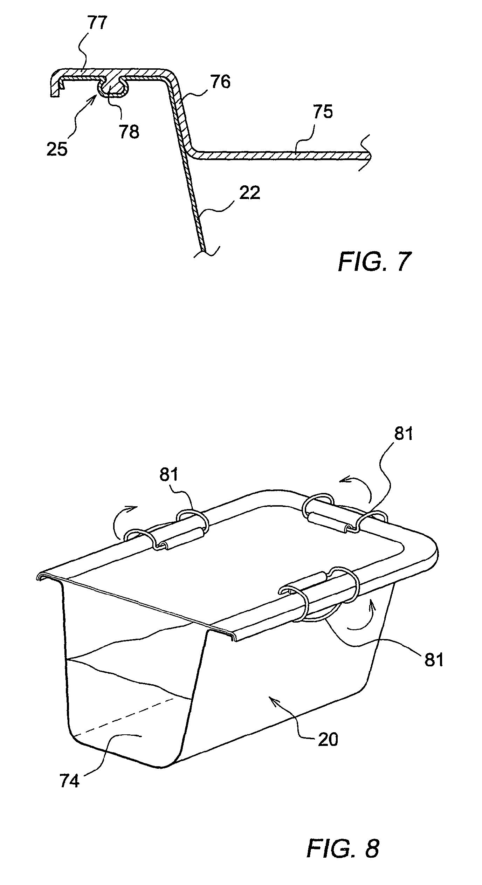

Fig. 7 shows an alternative engagement of the flanged edge 77 and the container 20, in which the rib 78 of the lid 70 fits into a groove 25 and thus achieves a liquid-tight seal between the peripheral flanged edges 23, 77 lying on top of one another.

The lid 70 could be provided with at least one handle in order to carry the disposable deep-frying pan component 20 sealed with the lid 71.

It will be clear that the form in which packaging 70 is sold in shops may be such that the user only has to remove the lid 71 and place the component 20 in the deep-frying apparatus in order to start deep-frying with clean deep-frying fat or oil. The user can keep the lid and replace the lid 71 on the component 20 when the deep-frying fat has been used a number of times. The sealed component 20 containing the used deep-frying fat can then be disposed of, for example in a waste container. In some cases, disposal of this waste together with the normal household waste is not permitted and in these cases, the sealed component 20 can be used in order to make it easier to take deep-frying fat to a depot.

Fig. 8 shows a deep-frying pan component 20 filled with deep-frying fat 74, which component is provided with a lid 80 with clamping elements 81 which in this case are integral with the lid 80. Here, the clamping elements 81 are metal clamps made of suitable metal wire.

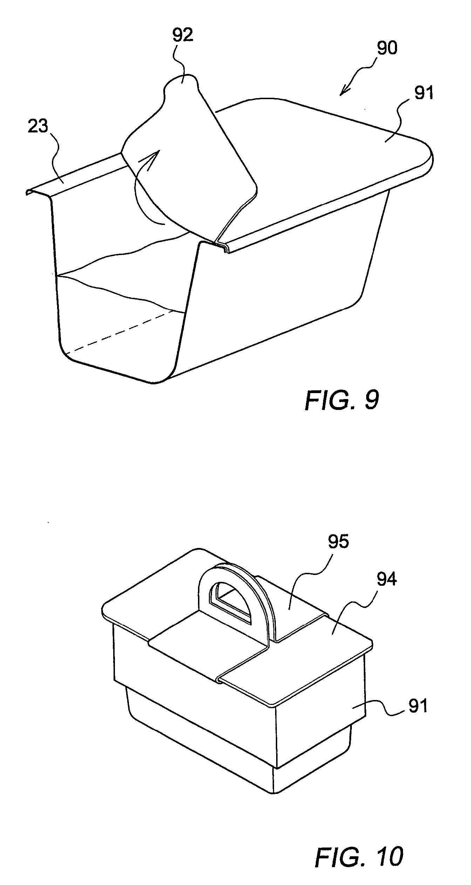

Fig. 9 shows a sales packaging 90 for deep-frying fat or oil with, for example, component 20 filled with the fat or oil. The open top is sealed with a removable film/foil seal 91, for example a metal foil, which is fastened in this case to the peripheral flanged edge 23. The film/foil 91 has a gripping element 92 for tearing open the film/foil. The user only has to remove the film/foil 91 and place the component 20 in the deep-frying apparatus.

Fig. 10 shows the sales packaging 90 together with a lid 94 for sealing component 20 when component 20 is used as a disposal packaging. The entirety is accommodated in a cardboard carrier with a handle 95. This carrier, which may be designed in the shape of a box or sleeve, may be provided with printing.

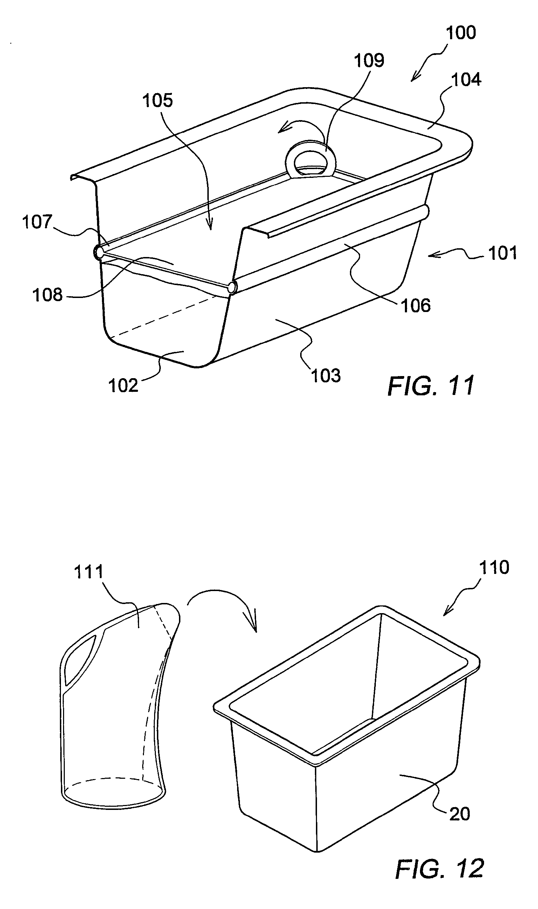

Fig. 11 shows a sales packaging 100 with a disposable deep-frying pan component 101 which is designed in this case as a dimensionally stable metal body with a base 102, upright side walls 103 and a top peripheral flanged edge 104. The packaging comprises a lid 105, in this case made of plastic, the periphery of which fits into a peripheral groove 106 which is formed in the side walls 103.

The outer periphery of the lid 105 is designed in the form of a peripheral rib 107 and inside the rib 107, there is a removable wall face 108, for example with a weakened break line between the wall face 108 and the peripheral rib 107. A pull tab 109 or the like is provided for tearing off the wall face 108.

Fig. 12 shows a part of a sales packaging 110 for deep-frying fat or oil in which component 20 is combined with a separate packaging 111 containing deep-frying fat or oil, in this example a bag-shaped packaging 111. The packaging 111 fits inside the holder and can then, together with the latter, be offered for sale in a box, bag or other closure of the open top of component 20. If desired, the closure is a lid which may also serve as a lid when the container 20 serves as a disposal packaging.

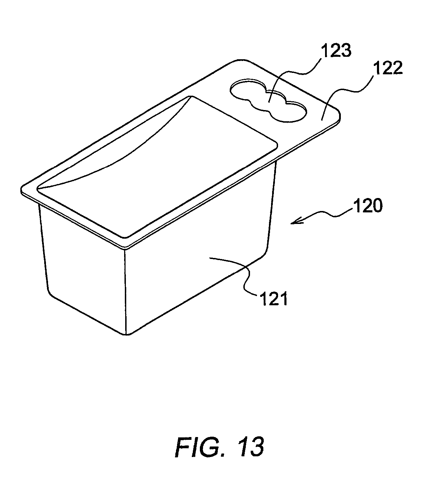

Fig. 13 shows a sales packaging 120 with a container 121 filled with a quantity of deep-frying fat or oil. A lid 122 with a handle 123 seals the container 121 in a liquid-tight manner.

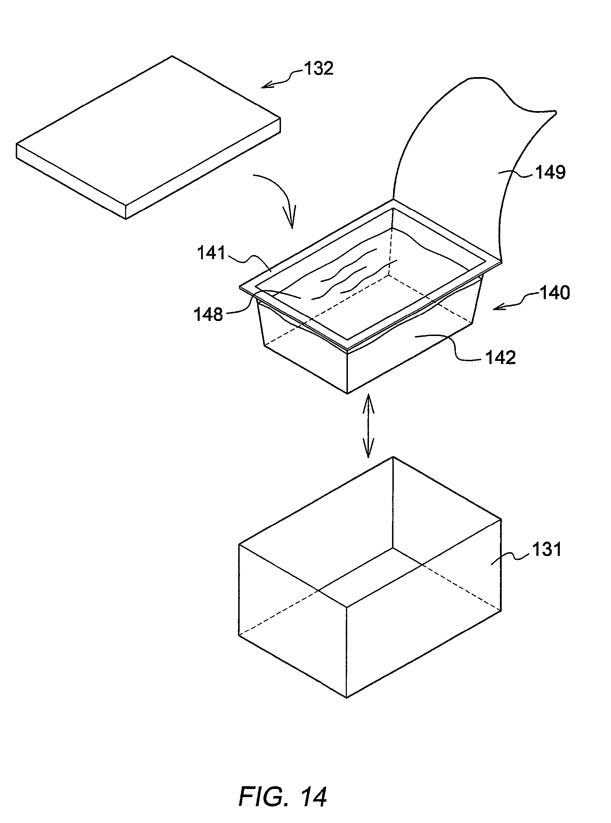

Fig. 14 shows another sales packaging 130 with a transportation box 131, a disposable deep-frying pan component 140 and a lid 132.

The deep-frying pan component 140 has a stable peripheral flanged edge 141, for example made of suitable plastic material and a reservoir 142 for deep-frying fat or oil which is made of film/foil material. This film/foil material may be metal foil or a suitable plastic film material.

For example, a metal foil, such as aluminium foil having a thickness of preferably not more than 0.4 millimetres, preferably not more than 0.2 millimetres, is used.

An embodiment made of heat-resistant plastic film material, such as for example polytetrafluoroethylene film, is also conceivable.

When the component 140 is placed in the deep-frying pan of a deep-frying apparatus, the film/foil material bears against the deep-frying pan. It will be clear that this deep-frying pan does not have to consist of more than a tray made of suitable heat-resistant material. This material does not have to be able to withstand intense contact with hot deep-frying fat and no measures against sticking food are required. A simple embodiment is possible in particular if heating is effected by means of a heating means placed in the deep-frying fat or oil.

Fig. 14 shows that the component 140 containing a quantity of oil 148 is sealed with a removable film/foil 149 before it is sold. The lid 132 can be used to seal the component 140 in order to dispose of the component 140 containing the deep-frying fat.

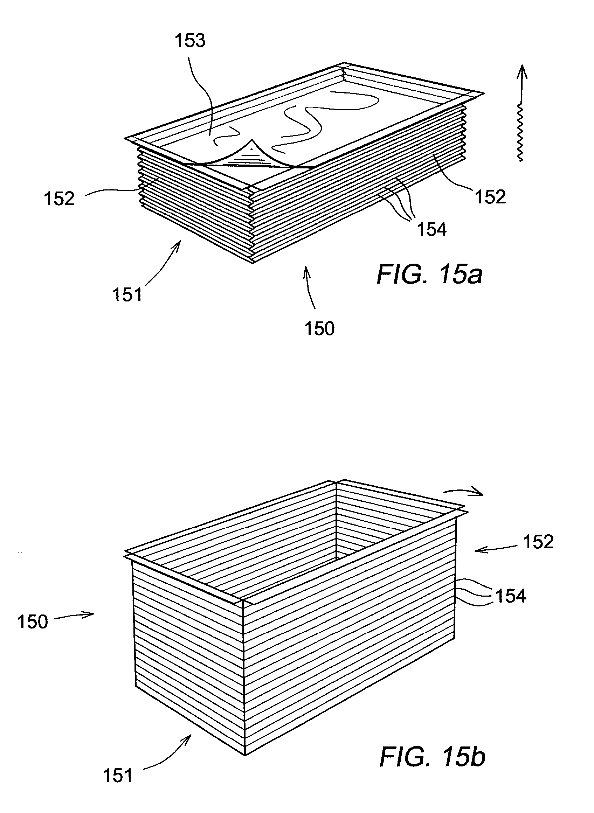

Figs. 15a and 15b show a disposable deep-frying pan component 150 which is preferably designed as a deep-frying pan lining component, but could also serve as a replacement for a deep-frying pan of a deep-frying apparatus.

The deep-frying pan component 150 has a base 151 and upright side walls 152 and an opening at the top. The opening can be sealed by means of associated sealing means, in this example consisting of a removable sealing film/foil 153, which is in this case fastened to the top peripheral edge of the side walls formed by the side walls 152.

The upright side walls 152 are in this case designed to be of variable height. In this example, this has been achieved by designing the side walls 152 as a folding wall with folding lines 154 running parallel to the base in each side wall, which run around the component 150. It will become clear from the description below that the variable height of the side walls can also be achieved in other ways.

One option which variable height offers is shown in Figs. 15a, b. With the side walls in a state where they are at a "low height" (Fig. 15a), the component may be filled with deep-frying oil, the height preferably being such that the effective volume of the component 150 is only slightly larger than (or optionally equal to) the volume of the deep-frying oil contained therein. It will be clear that this is advantageous for the distribution and sale of the prefilled deep-frying pan component. Optionally, the component 150 may not be filled directly with deep-frying oil, but the deep-frying oil may be contained in a bag accommodated in the former.

The relatively low height of the component 150 is inconvenient during deep-frying as foodstuffs which are to be deep-fried have to be added and the deep-frying oil often starts to bubble during deep-frying. Therefore, provision is made for the user to increase the height of the side walls 152, in this case by pulling the folding walls out. When the component 150 is disposed off (still filled), the user can reduce the height again.

A folding design for the side walls 152 is possible, for example, if the side walls are made of a suitable plastic material.

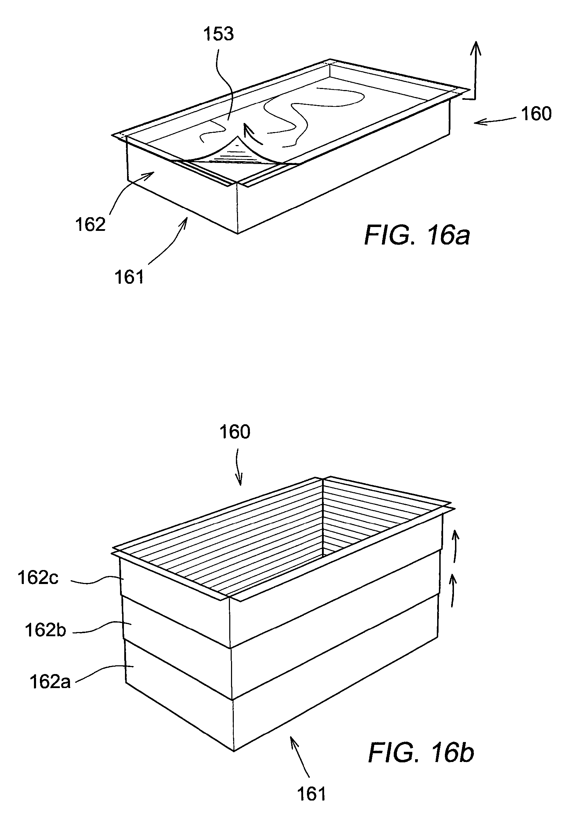

Figs. 16a and 16b show a deep-frying pan component 160 having a bottom 161 and side walls 162 of variable height. In this example, a sealing film/foil 163 is likewise provided and a quantity of deep-frying oil is contained in the component 160 (in this case filled directly into the latter).

In the example of Figs. 16a, b, the side walls 162 are designed to be extendable, with stationary side wall parts 162a which in this case are connected to the base 161 and thus form a tray, which, in this example, is of sufficient volume to accommodate the deep-frying oil. With respect to the stationary side wall parts 162, provision is made for one or more telescopically extendable side wall parts 162b and 162c, which in this example are located around the outside of the stationary side wall parts 162a.

The user can easily increase the height of the side walls 162 by extending the telescopic side walls and thus use the component 160 for deep-frying. The user can reduce the height again for disposal.

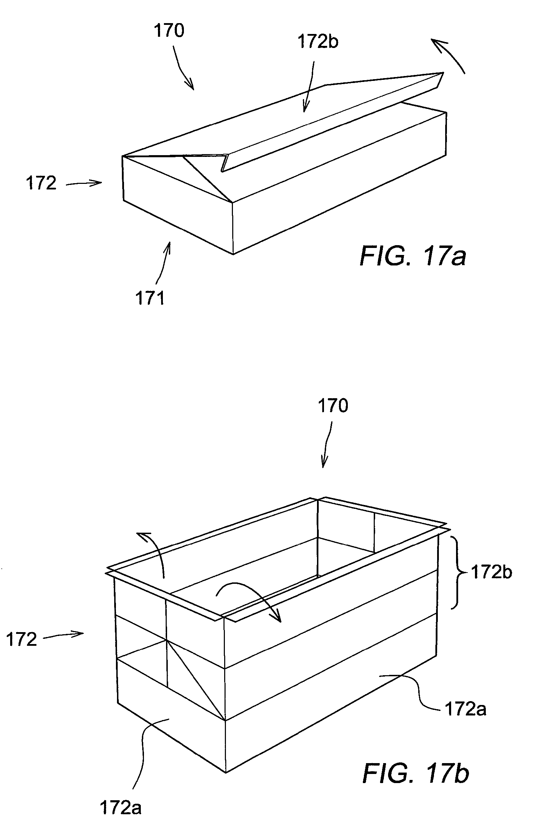

Figs. 17a and 17b show a disposable deep-frying pan component 170, which component 170 also serves as sales packaging. The component 170 has a base 171 with side walls 172 of variable height. In this case, this variation in height has been achieved by the fact that the side walls 172 have a bottom part 172a which is connected to the base 171 and a top part 172b which is foldable. The top part 172 can in this case be folded in such a way that the top part 172b, in the folded-in state, extends substantially parallel to the base 171. In this example, the folded-in top part 172a even acts as a kind of lid. Preferably, the height of the bottom part 172a is such that the required volume of deep-frying oil fits into the tray formed by the bottom part 172a and the base 171.

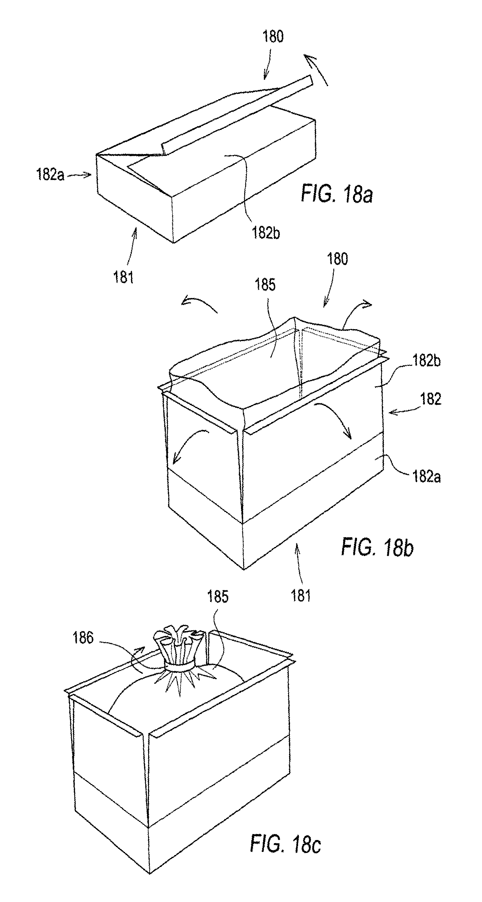

Figs. 18a-c show a disposable deep-frying pan component 180 having a base 181 and side walls 182. A bag 185 with a quantity of deep-frying oil is placed or can be placed in the deep-frying pan component 180. The bag is made of suitable heat-resistant material and is sealed in a suitable manner, so that the deep-frying oil is contained in this bag.

The bag 185 is dimensioned such that the open bag 185 is able to cover the interior of component 180 and in this example even protrudes over the side walls, so that the protruding part can be fastened. (Fig. 18b).

In this example, provision is again made for a deep-frying pan component 180 with side walls of variable height. In particular, provision is made in this case for side walls with a bottom part 182a which is connected to the base 181 and a top part 182b which can be folded in. It should be noted that in this case any seams between the top parts 182b of the side walls can remain open, as the deep-frying oil is in a bag, even during deep-frying.

After use, the user may close the bag and thus dispose of the deep-frying oil, if desired together with the component 180, preferably in folded condition.

In this example as well, the component 180 may be made of suitable plastic material, but an embodiment made of (thin-walled) metal is likewise conceivable.

It will be clear that the invention also provides a solution which consists of providing the user with a bag filled with deep-frying oil (such as bag 185) which bag is then placed into the deep-frying pan of the deep-frying apparatus by the user and, in the open state, is used for deep-frying. In this case, the bag forms the lining for the interior of the deep-frying pan. When the deep-frying oil can no longer be used, the user can close the bag and remove it from the deep-frying pan in order to dispose of it. Preferably, the bag is provided with suitable closure means, for example a suitable clip 186. Provision could be made for such a prefilled bag which serves as a deep-frying pan lining element to be packaged in a (cardboard) box for distribution and sales purposes.

In order to securely fasten the bag along the top edge of the deep-frying pan, associated fastening means could be provided, for example one or more clamping means, or for example a string and/or elastic band with which the top edge of the open bag can be fastened to the deep-frying pan or another part of the deep-frying apparatus.

The bag serving as deep-frying pan lining element may be made of suitable heat-resistant plastic material.

It will be clear to those skilled in the art that the various aspects of the system according to the invention can be achieved in a variety of combinations. The disposable deep-frying pan component can be used, when suitably dimensioned, in combination with existing deep-frying apparatuses. Based on the invention, it is likewise possible to develop a new deep-frying apparatus, for example in an embodiment where the deep-frying pan is just a tray which is open at the top, for example made of plastic, in which the deep-frying pan lining element is placed, for example made of metal foil.

## Claims

1. Deep-frying system comprising a deep-frying apparatus, which serves for accommodating a quantity of deep-frying fat or oil, which can be brought to and kept at a deep-frying temperature suitable for deep-frying foodstuffs by heating means, **characterized in that** the system furthermore comprises a disposable deep-frying pan component associated with the deep-frying apparatus, which disposable deep-frying pan component is designed as:
- a disposable deep-frying pan, or
- as a disposable deep-frying pan lining element which can be placed in a deep-frying pan of the deep-frying apparatus so as to be removable, in such a manner that the deep-frying pan lining element bears against the deep-frying pan and the deep-frying fat or oil does not come into contact with the deep-frying pan.

2. Deep-frying system according to claim 1, in which the disposable deep-frying pan component is designed to be part of a disposal packaging in order to be disposed of as waste together with the deep-frying fat or oil contained therein.

3. Deep-frying system according to claim 1 or 2, which deep-frying system furthermore comprises a sales packaging with the deep-frying fat or oil contained therein, **characterized in that** the disposable deep-frying pan component forms part of the sales packaging with the deep-frying fat or oil contained therein.

4. Deep-frying system according to claim 3, in which the disposable deep-frying pan component is filled with the deep-frying fat or oil in the sales packaging.

5. Deep-frying system according to claim 3, in which, in the sales packaging, the deep-frying fat or oil is contained in a separate packaging, for example in a bottle or bag.

6. Deep-frying system according to claim 5, in which the separate packaging is packaged inside the disposable deep-frying pan component.

7. Deep-frying system according to one or more of the preceding claims 2-6, in which the disposal and/or sales packaging furthermore comprises sealing means for sealing the disposable deep-frying pan component with the deep-frying fat or oil contained therein.

8. Deep-frying system according to one or more of the preceding claims 2-7, in which the disposal and/or sales packaging furthermore comprises a separate sleeve, for example a box (optionally with a matching lid) or a bag, for accommodating the disposable deep-frying pan component and the deep-frying fat or oil contained therein.

9. Deep-frying system according to claim 7, in which the sealing means comprise a disposable lid for sealing the open top of the disposable deep-frying pan component, so that the sealed deep-frying pan component with the deep-frying fat or oil contained therein can be used as disposal packaging.

10. Deep-frying system according to claim 9, in which coupling means are provided, for example snap-in means, for effecting a coupling between the lid and the disposable deep-frying pan component.

11. Deep-frying system according to claim 10, in which, in the coupled state, the lid fits the deep-frying pan in a liquid-tight manner, for example in which the disposable deep-frying pan component and the lid are provided with peripheral edges which can be coupled to one another.

12. Deep-frying system according to claim 10 or 11, in which the coupling means comprise separate coupling components, for example individual clamps for coupling the lid to the deep-frying pan component.

13. Deep-frying system according to one or more of the claims 9-12, in which the lid has a cover face which extends over the deep-frying fat or oil, which cover face is recessed with respect to the top edge of the disposable deep-frying pan component.

14. Deep-frying system according to claim 13, in which the side walls of the disposable deep-frying pan component are provided with coupling means for the lid at a distance below the top edge thereof, for example a peripheral groove into which the periphery of the lid fits in a clamping manner.

15. Deep-frying system according to claim 14, in which the lid has a peripheral rib which fits into the peripheral groove, as well as a removable wall face within the peripheral rib, for example having a weakened break line between the wall face and the peripheral rib.

16. Deep-frying system according to claim 13, in which the lid has side walls protruding upright from the peripheral edge of the cover face which end in a top peripheral edge of the lid, so that the side walls of the lid extend along the side walls of the disposable deep-frying pan component and the peripheral edge bears against the peripheral edge of the disposable deep-frying pan component.

17. Deep-frying system according to one or more of the claims 9-16, in which the lid is provided with at least one handle for carrying the disposable deep-frying pan component closed off by the lid.

18. Deep-frying system according to one or more of the claims 9-17, in which the lid is made of plastic.

19. Deep-frying system according to claim 7, in which a sealing film/foil is provided for sealing the disposable deep-frying pan component filled with the deep-frying fat or oil.

20. Deep-frying system according to one or more of the preceding claims, in which the disposable deep-frying pan component has a base with an upright peripheral wall, for example a substantially rectangular base with upright side walls.

21. Deep-frying system according to one or more of the preceding claims, in which the disposable deep-frying pan component is, at least partially, made of metal, preferably sheet metal, such as for example aluminium and/or stainless steel, the metal optionally being provided with a non-stick layer for the deep-frying fat or oil.

22. Deep-frying system according to claim 21, in which the disposable deep-frying pan component has a dimensionally stable body made of metal with a thickness of preferably between 0.5 and 1.5 millimetres.

23. Deep-frying system according to claim 21, in which the disposable deep-frying pan component is at least partially made of metal foil, such as aluminium foil, of a thickness of preferably not more than 0.4 millimetres, preferably not more than 0.2 millimetres.

24. Deep-frying system according to one or more of the preceding claims, in which the disposable deep-frying pan component is at least partially made of heat-resistant plastic material.

25. Deep-frying system according to claim 24, in which the disposable deep-frying pan component is at least partly made of heat-resistant plastic film material, such as for example polytetrafluoroethylene film.

26. Deep-frying system according to one or more of the preceding claims, in which the disposable deep-frying pan component has a base which is partly made of metal and a peripheral wall which is at least partly made of plastic.

27. Deep-frying system according to one or more of the preceding claims, in which the disposable deep-frying pan component comprises a support structure, for example made of metal, which supports a deep-frying fat/oil reservoir made of film/foil material.

28. Deep-frying system according to one or more of the preceding claims, in which the deep-frying apparatus comprises a housing and heating means, for example electrical heating means.

29. Deep-frying system according to claim 28, in which the housing is designed to accommodate a deep-frying pan so as to be removable.

30. Sales packaging containing deep-frying fat or oil adapted to be used in a deep-frying apparatus, **characterized in that** the sales packaging comprises a disposable deep-frying pan component.

31. Sales packaging according to claim 30, in which the disposable deep-frying pan component is filled with deep-frying fat or oil.

32. Sales packaging containing deep-frying fat or oil according to one of more of the preceding claims.

33. Disposal packaging for deep-frying fat or oil according to one or more of the preceding claims.

34. Disposable deep-frying pan component according to one or more of the preceding claims.

35. Use of a system according to one or more of the preceding claims for deep-frying, in particular for disposing of used deep-frying fat or oil.

36. Method for selling deep-frying fat or oil to users, in which use is made of a disposable deep-frying pan component according to one or more of the preceding claims.

37. Method for deep-frying foodstuffs, in which use is made of a system according to one or more of the preceding claims.
